# EUROPÄISCHE PATENTSCHRIFT

(11) **EP 2 544 852 B1**
(45) Veröffentlichungstag und Bekanntmachung des Hinweises auf die Patenterteilung: **22.01.2014**
(21) Anmeldenummer: 11706537.5
(22) Anmeldetag: 28.02.2011
(51) Int. Cl.: B23P 6/00, F01D 11/12

(54) **VERFAHREN ZUR REPARATUR VON DICHTSEGMENTEN IN DER ROTOR-/STATORDICHTUNG EINER GASTURBINE**
METHOD FOR REPAIRING SEALING SEGMENTS IN THE ROTOR/STATOR SEAL OF A GAS TURBINE
PROCÉDÉ DE RÉPARATION DE SEGMENTS D'ÉTANCHÉITÉ DANS LE JOINT DE ROTOR/DE STATOR D'UNE TURBINE À GAZ

(30) Priorität: 08.03.2010 DE 102010010595
(43) Veröffentlichungstag der Anmeldung: 16.01.2013
(73) Patentinhaber: Lufthansa Technik AG, 22335 Hamburg (DE)
(72) Erfinder: LÜBCKE, Tim, 22083 Hamburg (DE); TIEDEMANN, Volker, 23863 Kayhude (DE)
(74) Vertreter: Glawe, Delfs, Moll
(86) Internationale Anmeldenummer: PCT/EP2011/052891
(87) Internationale Veröffentlichungsnummer: WO 2011/110435

(56) Entgegenhaltungen:
- EP-A1- 1 416 063
- EP-A1- 1 865 150
- EP-A1- 2 159 460
- EP-A2- 2 065 565
- WO-A1-02/099254
- DE-C1- 10 225 532
- US-A- 4 299 865

## Beschreibung

Die Erfindung betrifft ein Verfahren zur Reparatur von Dichtflächen von am Innenumfang eines Turbinengehäuseteils angeordneten Dichtsegmenten einer Rotor-/Statordichtung einer Gasturbine.

Ein solches Reparaturverfahren, bei dem zuerst Material von den Dichtflächen abgetragen, anschließend das Grundmaterial wiederhergestellt und schließlich eine Einlaufdichtung in Form einer Einlaufschicht aufgetragen wird, ist in der EP 2 159 460 offenbart.

Bei Turbomaschinen, insbesondere Gasturbinen wie beispielsweise Strahltriebwerken von Flugzeugen, vermindern Leckströme durch Spalte zwischen zusammenwirkenden und sich relativ zu einander bewegenden Rotor- und Statorbauteilen den Wirkungsgrad. Um diese Spaltverluste zu minimieren und damit den Wirkungsgrad der Strömungsmaschine hoch zu halten, ist es erforderlich, den Spalt zwischen den üblicherweise hochtourig laufenden Rotorschaufeln und der den Rotor umgebenden, zum Stator gehörenden Dichtfläche des Gehäuses im laufenden Betrieb der Maschine gering zu halten. Dies ist problematisch, da sich Rotorschaufeln bei hoher Belastung sowohl durch thermische Beanspruchung als auch durch Zentrifugalkräfte in Radialrichtung längen, während das Gehäuse in der Regel nur eine geringe thermische Dehnung und damit Vergrößerung des Gehäuseumfangs erfährt. Das Spaltmaß ist also im Betrieb der Gasturbine veränderlich

Um diesen Spaltmaßveränderungen Rechnung zu tragen, sind sogenannte Einlaufdichtungen (abradable seals) bekannt (US 4,299,865). Dabei werden die Schaufelspitzen des Rotors aus einem harten Material gefertigt bzw. mit einer harten Beschichtung versehen und die Einlaufdichtung des umgebenden Stators verhältnismäßig weich ausgebildet. In verschiedenen Betriebszuständen kann es dann zu einem Einlaufen der Schaufelspitzen in die Statordichtung kommen und ein Materialabtrag der Einlaufdichtung stattfinden, ohne dass eine Beschädigung der Schaufeln erfolgt.

Abradable Seals können aus keramischen oder metallischen Werkstoffen oder einer Kombination daraus bestehen. Sie können ferner eine Schichtstruktur aus metallischen und keramischen Werkstoffen aufweisen.

Der Erfindung liegt die Aufgabe zugrunde, ein Verfahren der eingangs genannten Art zu schaffen, das ein einfaches und kostengünstiges Aufbringen einer Einlaufschicht (Abradable Seal) bei einer Erneuerung bzw. einem Austausch einer Rotor/Statordichtung im Zuge der Wartung oder Reparatur einer Gasturbine ermöglicht. Das erfindungsgemäße Verfahren weist folgende Schritte auf:
a) Abtragen von Material von den Dichtflächen der Dichtsegmente bis auf das Grundmaterial der Dichtsegmente,
b) Aufbringen wenigstens einer metallischen Verstärkungsschicht mit einer Materialstärke von wenigstens 1 mm,
c) Aufbringen einer Keramikschicht mit einer Materialstärke von 0,3 bis 2 mm.

Zunächst seien einige im Rahmen der Erfindung verwendete Begriffe erläutert.

Eine Gasturbine ist eine Strömungsmaschine, bei der die thermische Energie eines durch Verbrennung von Kohlenwasserstoffen oder anderen Treibstoffen entstehenden Heißgasstroms in mechanische Energie umgesetzt wird. Die Erfindung ist insbesondere anwendbar bei Strahl- oder Turboproptriebwerken von Flugzeugen.

Eine Rotor-/Statordichtung dichtet in einer Drehbewegung relativ zueinander laufende Bauteile der Gasturbine gegeneinander ab, insbesondere die Schaufelspitzen eines Rotors gegen den Umfang eines umgebenden Turbinengehäuses.

Der Begriff Turbinengehäuseteil bezeichnet im Kontext des Anspruch 1 denjenigen Teil der Turbine, der die den Rotor umgebende Statordichtung aufweist bzw. haltert. Es kann sich im Rahmen der Erfindung insbesondere um ein Modul eines Strahltriebwerks handeln, in dem die Statordichtung angeordnet ist.

Am Innenumfang dieses Turbinengehäuseteils sind Dichtsegmente angeordnet. Der Begriff Dichtsegmente bezeichnet demontierbare bzw. einzeln austauschbare Teile, die jeweils einen Bruchteil des Innenumfangs des Turbinengehäuses auskleiden. Eine Mehrzahl von Dichtsegmenten erstreckt sich über den gesamten Umfang des Turbinengehäuseteils und bildet gemeinsam die Statordichtung.

Die Dichtsegmente weisen Dichtflächen auf, es handelt sich um diejenigen Flächen, die dem Rotor zugewandt sind. Auf diese Dichtflächen wird erfindungsgemäß eine metallische Verstärkungsschicht und eine Keramikschicht aufgebracht. Der Begriff Keramikschicht bezeichnet im Rahmen der Erfindung alle Materialien, die einen Anteil keramischer Materialien aufweisen und zur Ausbildung eines sogenannten abradable seals (Einlaufdichtung) geeignet sind. In aller Regel basieren diese Keramikschichten auf Materialien wir ZrO₂, Al₂O₃ und/oder anderen Metall-, Übergangsmetall- oder Seltenerdoxiden bzw. -mischoxiden.

Erfindungsgemäß wird im ersten Schritt Material von den Dichtflächen der Dichtsegmente bis auf das Grundmaterial abgetragen. Dies bedeutet, dass etwaige Einlaufdichtungen (keramisch oder metallisch) vollständig entfernt werden, sodass das Grundmaterial des Dichtsegments als Substrat für die im nächsten Schritt aufzubringende metallische Verstärkungsschicht zur Verfügung steht.

Die in Schritt b) aufgebrachte metallische Schicht wird als Verstärkungsschicht bezeichnet, um zum Ausdruck zu bringen, dass diese die Abmessungen des Dichtsegments in Radialrichtung vergrößert. Es handelt sich hier nicht um eine weiche metallische Einlaufschicht, sondern um eine Verstärkung des Grundmaterials des Dichtsegments vorzugsweise mit einem Material, das dem Grundmaterial ähnlich oder artgleich ist.

Kern der Erfindung ist es, bei der Durchführung der Reparatur ein in Radialrichtung verhältnismäßig dickes Abradable Seal zu ersetzen durch eine deutlich dünnere Dichtung und zu diesem Zweck nach Abtragen des am Bauteil ursprünglich angebrachten (und in der Regel ganz oder teilweise verschlissenen) Abradable Seal zunächst das Grundmaterial des Dichtsegments in Radialrichtung zu verstärken, um so die Basis für das Aufbringen einer dünneren keramischen Einlaufdichtung (Abradable Seal) zu schaffen.

Die metallische Verstärkungsschicht weist vorzugsweise ein dem Grundmaterial des Dichtsegments artgleiches Material auf. Artgleich bedeutet, dass es sich um ein stoffliches und/oder in den Eigenschaften identisches bzw. ähnliches Metall oder um eine entsprechende Legierung handelt.

Die metallische Verstärkungsschicht kann bevorzugt aufgebracht werden durch ein Verfahren ausgewählt aus der Gruppe bestehend aus Schweißen, Löten und Löt-Diffusion unter Einsatz eines vorgesinterten Löt-Preforms. Diese Techniken sind dem Fachmann grundsätzlich geläufig und am Beispiel der Reparatur von Turbinenschaufeln (vanes) beispielsweise beschrieben in Materials Science and Technology, September 1985, Volume 1, 719. Unter den geeigneten Schweißverfahren seien beispielhaft Wolfram-Inertgas Schweißen sowie das Elektronenstrahl-Schweißen genannt. Geeignete Lötverfahren sind beispielsweise beschrieben in US 7,363,707 B2.

Besonders bevorzugt ist im Rahmen der Erfindung das Aufbringen der metallischen Verstärkungsschicht durch Löt-Diffusion unter Einsatz eines vorgesinterten Löt-Preforms. Diese Technik ist beispielsweise beschrieben in US 4,614,296. Zur Herstellung eines Löt-Preforms wird Metallpulver des Basismaterials (Basispulver) verpresst mit einem niedrig schmelzenden Metallpulver (Lotpulver). Das Lotpulver schmilzt teilweise beim Vorsintern, sodass ein fester Körper (Löt-Preform) entsteht. Das Basispulver ist bevorzugt Pulver einer Superlegierung, beispielsweise die nickelbasierte Superlegierung Rene 80. Als Lotpulver werden bevorzugt Nickelbasislote mit einem den Schmelzpunkt senkenden Element verwendet, das im Grundmaterial (der Superlegierung) eine hohe Diffusionsrate aufweist, beispielsweise Bor. Bei der Durchführung des Diffusionslötens wird der Löt-Preform auf das Dichtsegment aufgelegt und auf eine Löttemperatur erwärmt, die das Aufschmelzen des Lotpulvers gestattet. Die Schmelztemperatur des Lotpulvers liegt unterhalb der Solidustemperatur der Superlegierung, so dass diese während des Diffusionslötens nicht aufgeschmolzen wird. Im Zuge des Diffusionslötvorgangs erstarrt das zunächst verflüssigte Lot isotherm aufgrund der Diffusion des den Schmelzpunkt senkenden Bors in das Grundmaterial. Der Löt-Preform weist bevorzugt wenigstens 40 Gew.-%, vorzugsweise 50 bis 85 Gew.-%, weiter vorzugsweise 60 bis 80 Gew.-% eines dem Grundmaterial des Dichtsegments artgleiches Basispulver und ein Lotpulver auf.

Die erfindungsgemäß aufgebrachte metallische Verstärkungsschicht kann bevorzugt eine Materialstärke von 1 bis 4 mm, weiter vorzugsweise 1 bis 3,5 mm, weiter vorzugsweise 1,5 bis 3 mm, weiter vorzugsweise 2 bis 3 mm aufweisen. Die genannten Ober- und Untergrenzen sind beliebig zu erfindungsgemäßen Bereichen kombinierbar.

Es ist im Rahmen der Erfindung bevorzugt, dass vor dem Aufbringen der Keramikschicht eine Haftvermittlerschicht auf das Substrat der Dichtsegmente aufgebracht wird. Die Dicke der Haftvermittlerschicht beträgt bevorzugt 0,1 mm oder weniger. Bei der Haftvermittlerschicht handelt es sich bevorzugt um eine MCrAlY-Schicht, bei der M bevorzugt ein Metall ausgewählt aus der Gruppe Nickel, Kobalt, Eisen oder Kombinationen daraus ist. Andere Elemente wie beispielsweise Hafnium oder Silizium als sogenannte reactive element additions können hinzugefügt werden, um die Oxidationsbeständigkeit und Lebensdauer der Haftvermittlerschicht (Bond Coat) zu erhöhen. Die Haftvermittlerschicht wird bevorzugt durch Plasmaspritzen aufgebracht. Ggf. kann Vakuumplasmaspritzen (low vacuum plasma spray, LVPS) verwendet werden, jedoch auch das atmosphärische Plasmaspritzen. Ein geeignetes Material für die Haftvermittlerschicht ist beispielsweise ein von Sulzer Metco erhältliches feinkörniges Pulver auf CoNiCrAlY Basis wie beispielsweise Amdry 995.

Das Aufbringen der Keramikschicht erfolgt erfindungsgemäß bevorzugt durch atmosphärisches Plasmaspritzen (atmospheric plasma spray, APS). Beim Plasmaspritzen wird ein Plasmastrahl verwendet, dessen thermische Energie erzeugt wird durch die Rekombination eines vorher erzeugten Gasplasmas. In den Plasmastrahl wird das aufzutragende Material als Pulver gespeist. Beim atmosphärischen Plasmaspritzen erfolgt der Materialauftrag in normaler Umgebungsatmosphäre. Die Verwendung von atmosphärischem Plasmaspritzen als Verfahren zum Aufbringen der Keramikschicht hat den besonderen Vorteil, dass die in der Regel recht großen Turbinengehäuseteile nicht in eine kontrollierte Atmosphäre wie beispielsweise eine Unterdruckkammer überführt werden müssen. Die beim atmosphärischen Plasmaspritzen erzielbare Qualität der Keramikschicht ist für die erfindungsgemäßen Zwecke ohne weiteres hinreichend.

Das Turbinengehäuseteil kann erfindungsgemäß beispielsweise ein sogenanntes High Pressure Turbine Shroud Support (HPT Shroud Support) eines Strahltriebwerks sein. Die erfindungsgemäß möglich gute Dichtwirkung bzw. die Erzielung eines geringen Dichtspaltes kann sich insbesondere bei der Hochdruckturbine in einem verbesserten Wirkungsgrad und damit einer Treibstoffeinsparung bemerkbar machen. Die erfindungsgemäß aufgebrachte Keramikschicht weist vorzugsweise eine Porosität von 10 bis 40 Vol.-%, weiter vorzugsweise 20 bis 30 Vol.-% auf. Eine solche Porosität trägt dazu bei, die Keramikschicht hinreichend weich zu gestalten und ihr sogenannte Einlaufeigenschaften zu verleihen. Gerät die Schaufelspitze des Rotors mit einer solchen Keramikschicht in Kontakt, soll die Werkstoff- bzw. Reibpaarung derart gestaltet sein, dass ausschließlich oder vorwiegend die Keramikschichtdichtfläche abgetragen wird und kein oder nur ein geringer Verschleiß an der Schaufelspitze auftritt.

Zur Erzielung der Porosität ist es bevorzugt, dass das aufgebrachte Keramikmaterial im Zeitpunkt des Aufbringens einen Anteil eines thermisch entfernbaren Stoffes enthält. Dabei kann es sich insbesondere um ein Polymer wie beispielsweise ein Polyester handeln. Thermisch entfernbar bedeutet, dass der Stoff bei Zufuhr thermischer Energie weitgehend oder vollständig rückstandsfrei aus der Keramikschicht entweicht und dabei Hohlräume in Form von Poren hinterlässt. Das Entfernen kann geschehen durch Verdampfen, Sublimation oder thermische Zersetzung bzw. Verbrennung unter Entweichen gasförmiger Zersetzungsprodukte. Fakultativ kann auf die Haftvermittlerschicht eine erosionsfeste Keramikzwischenschicht unter Verwendung eines Keramikpulvers wie z.B. Praxair 1484 aufgebracht werden. Dies geschieht vorzugsweise durch atmosphärisches Plasmaspritzen, die Schichtdicke beträgt 100 bis 300 µm.

Das Keramikmaterial der Keramikschicht basiert beispielsweise auf ZrO₂ (Zirkondioxid), es kann dotiert sein mit Seltenerdmetalloxiden wie beispielsweise Y₂O₃ oder anderen. Geeignete aufsprühbare Keramikpulver können beispielsweise auf YSZ (Yttria stabilized Zirconia) basieren und beispielsweise Polyester zur Herstellung der gewünschten Porosität enthalten. Ein geeignetes Pulver ist beispielsweise von Sulzer Metco unter der Bezeichnung Metco 2460 NS erhältlich.

Die Dicke der aufgebrachten Keramikschicht kann bevorzugt im Bereich 0,2 bis 2 mm, weiter vorzugsweise 0,5 bis 1,5 mm liegen. Eine solche vergleichsweise dünne keramische Einlaufschicht neigt nicht oder weniger zum Abplatzen im Vergleich zu einer dicken keramischen Einlaufschicht (beispielsweise 4 mm dick), die durch das erfindungsgemäße Verfahren ersetzt werden kann.

Ein Ausführungsbeispiel der Erfindung wird im folgenden anhand der Zeichnungen beschrieben. Darin zeigen:
- Fig. 1:: einen Querschnitt durch eine Gasturbinensektion;
- Fig.2:: eine Aufsicht auf das Turbinengehäuse;
- Fig. 3:: das Zusammenwirken von Turbinenschaufel und Dichtfläche im Betrieb.

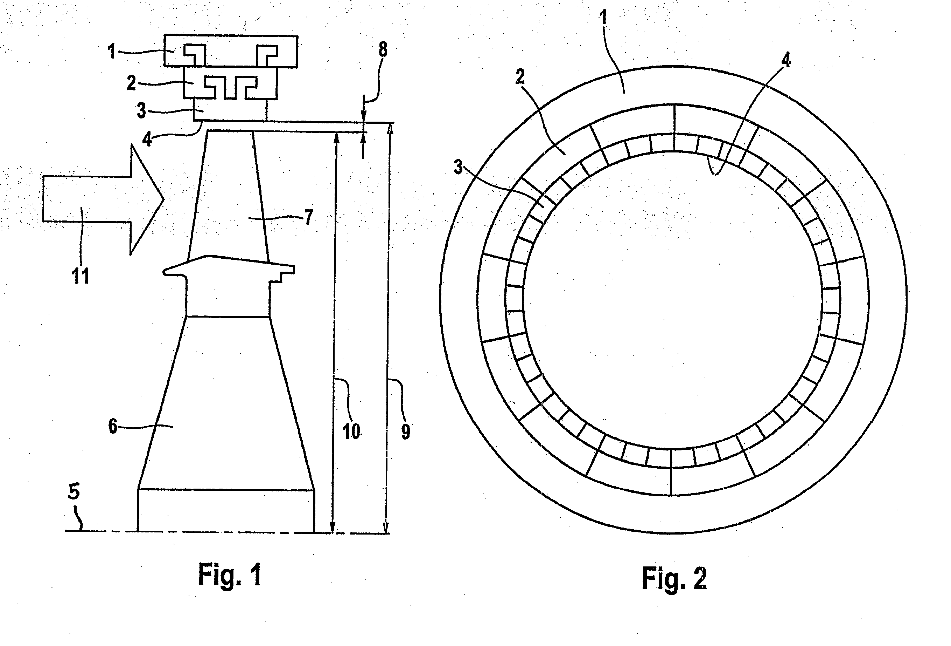

Figur 2 zeigt in der Aufsicht ein Turbinengehäuse 1, an dessen Innenumfang Aufnahmesegmente 2 für die Dichtsegmente 3 angeordnet sind. Die über den Umfang des Turbinengehäuses 1 aneinander anstoßenden Dichtsegmente 3 weisen an ihren radial nach innen weisenden Umfangsflächen Dichtflächen 4 auf.

In Figur 1 zeigt die Bezugsziffer 5 schematisch die Rotationssymmetrieachse der Gasturbine. An der Rotorscheibe 6 sind über den Umfang verteilt eine Mehrzahl von Turbinenlaufschaufeln 7 (Rotorschaufel oder Rotorblätter) angeordnet. Die radial nach außen weisenden Spitzen der Turbinenschaufel 7 dichten gegen die Dichtflächen 4 der Dichtsegmente 3 ab und schließen mit diesen einen Dichtspalt 8 ein, der sich aus der Differenz des Stator-Radius 9 und des Rotor-Radius 10 errechnet. Der Pfeil 11 bezeichnet die Richtung des durch die Gasturbine strömenden Gasstroms.

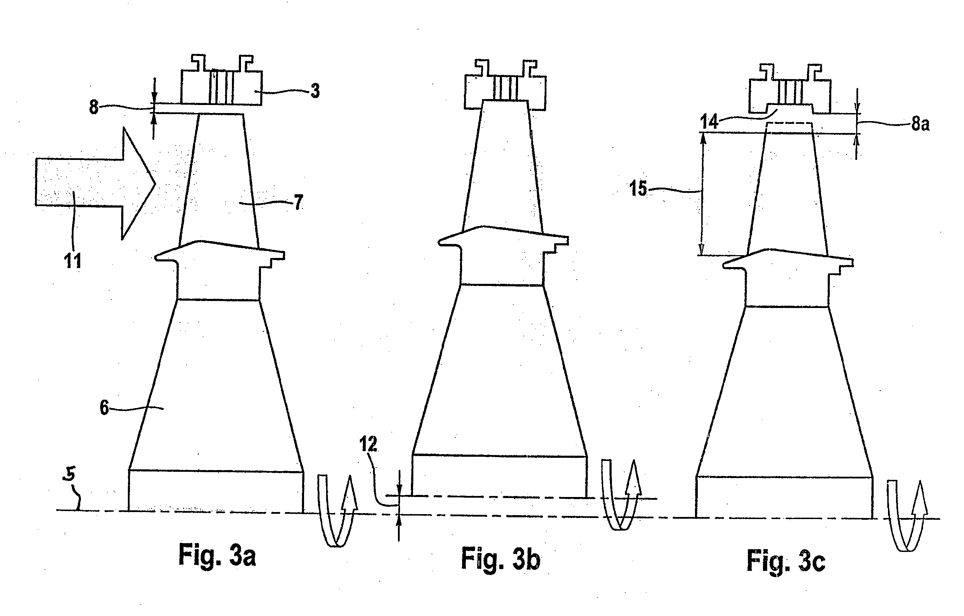

Figur 3a zeigt den auch in Figur 1 dargestellten Ausgangszustand. Das Dichtsegment 3 weist bei dieser Ausführungsform eine keramische Dichtfläche auf.

Im Betrieb des Triebwerks kann es aufgrund thermischer Ausdehnungen und/oder einer in Figur 3b bei 12 schematisch dargestellten Rotor-Exzentrizität zu einem Einlaufen der Turbinenschaufel 7 in die Dichtfläche des Dichtsegments 3 kommen. Durch das Einlaufen entsteht im Dichtsegment 3 eine in Figur 3c schematisch dargestellte Einlaufkerbe 14 und die Schaufellänge 15 wird durch Materialabtrag an der Spitze der Turbinenschaufel 7 verringert. Es entsteht ein vergrößerter Dichtspalt 8a; der Wirkungsgrad des Triebwerks verringert sich.

Zur Durchführung eines erfindungsgemäßen Reparaturverfahrens wird zunächst die vorhandene und ganz oder teilweise verschlissene Einlaufdichtung (abradable coating) von dem Dichtsegment 3 vollständig abgetragen. Im Ausführungsbeispiel handelt es sich um eine im ursprünglichen Neuzustand etwa 4 mm dicke poröse Keramikschicht. Diese bzw. deren Reste werden mittels eines Hochdruckwasserstrahls abgetragen. Ggf. können verbleibende Reste der Einlaufdichtung chemisch und/oder mechanisch (beispielsweise Schleifen) abgetragen werden. Das Abtragen erfolgt somit bis auf das Grundmaterial des Dichtsegments 3, bei dem es sich um eine nickelbasierte Superlegierung handelt.

Anschließend erfolgt eine Prüfung des Dichtsegments, insbesondere eine Prüfung auf Risse mittels penetrierender Fluoreszenzfarblösung. Sofern sich Risse zeigen, können diese beispielsweise durch Auftragsschweißen, insbesondere Wolfram Inertgas Auftragsschweißen, behoben werden.

Die bis auf das Grundmaterial abgetragenen Dichtflächen des Dichtsegments 3 werden mittels Schleifen für das Aufbringen der metallischen Verstärkungsschicht vorbereitet. Ein Löt-Preform der gewünschten Form und Stärke wird mittels Widerstandspunktlöten an die Dichtfläche des Dichtsegments 3 angeheftet. Das verwendete Löt-Preform enthält 70 Gew.-% eines mit der Nickelsuperlegierung des Dichtsegments 3 artgleichen Nickelbasispulvers (Rene 80) und 30 Gew.-% Nickelbasislot Praxair NI-173 mit Bor als Schmelzpunktserniedriger.

Das Dichtsegment 3 mit dem angehefteten Löt-Preform wird in einen Vakuumofen verbracht und bei einem Druck von 10⁻⁴ mbar auf die Löttemperatur von 1210°C aufgeheizt und bei dieser Temperatur für 15 min gehalten. Anschließend wird die Temperatur auf die Diffusionstemperatur von 1100°C gesenkt und bei dieser Temperatur für 120 min gehalten.

Nach Abkühlen erfolgt eine visuelle Überprüfung und ein Einstellen der endgültigen Form, dies kann beispielsweise Schleifen Oder auch ein Heißformen der Dichtsegmente in einer Heißformpresse umfassen. Wieder kann sich eine Prüfung auf Risse mittels Fluoreszenzfarbstoff anschließen.

Zur Vorbereitung der Plasmabeschichtung (Aufbringen der Keramikschicht) wird ein sogenanntes Aktivierungsstrahlen durchgeführt. Zu diesem Zweck wird Al₂O₃-Strahlgut der Körnung Mesh 36 verwendet.

Im nächsten Schritt wird eine Haftvermittlerschicht aufgebracht. Zu diesem Zweck wird ein feinkörniges Pulver auf MCrAlY-Basis Amdry 995 durch Vakuumplasmaspritzen aufgebracht. Die Schichtdicke dieser Haftvermittlerschicht liegt zwischen 100 und 300 µm. Fakultativ kann auf die Haftvermittlerschicht eine erosionsfeste Keramikzwischenschicht unter Verwendung eines Keramikpulvers wie z.B. Praxair 1484 aufgebracht werden. Dies geschieht vorzugsweise durch atmosphärisches Plasmaspritzen, die Schichtdicke beträgt 100 bis 300 µm.

Im nächsten Schritt wird die eigentliche keramische Einlaufschicht mit der gewünschten Materialstärke zwischen 0,3 und 2 mm (im Ausführungsbeispiel 1,2 bis 1,5 mm) aufgetragen. Als Beschichtungsmaterial wird Metco 2460 NS verwendet.

Die neu aufgebrachte Dichtfläche wird ggf. bearbeitet, insbesondere geschliffen.

Mittels des erfindungsgemäßen Verfahrens ist somit eine verhältnismäßig dicke keramische Einlaufschicht (4 mm) ersetzt worden durch eine dünne keramische Einlaufschicht, die auf ein in der Substanz des Grundmaterials durch Diffusionslöten verstärktes Dichtsegment aufgebracht ist.

## Patentansprüche

1. Verfahren zur Reparatur von Dichtflächen von am Innenumfang eines Turbinengehäuseteils angeordneten Dichtsegmenten einer Rotor/Statordichtung einer Gasturbine, mit den Schritten:
a) Abtragen von Material von den Dichtflächen (4) der Dichtsegmente (3) bis auf das Grundmaterial der Dichtsegmente,
b) Aufbringen wenigstens einer metallischen Verstärkungsschicht mit einer Materialstärke von wenigstens 1 mm,
c) Aufbringen einer Keramikschicht mit einer Materialstärke von 0,3 bis 2 mm.

2. Verfahren nach Anspruch 1, **dadurch gekennzeichnet, dass** die metallische Verstärkungsschicht ein dem Grundmaterial des Dichtsegments artgleiches Material aufweist.

3. Verfahren nach Anspruch 1 oder 2, **dadurch gekennzeichnet, dass** die metallische Verstärkungsschicht aufgebracht wird durch ein Verfahren ausgewählt aus der Gruppe bestehend aus Schweißen, Löten und Löt-Diffusion unter Einsatz eines vorgesinterten Löt-Preforms.

4. Verfahren nach Anspruch 3, **dadurch gekennzeichnet, dass** der Löt-Preform wenigstens 40 Gew.-%, vorzugsweise 50 bis 85 Gew.-%, weiter vorzugsweise 60 bis 80 Gew.-% eines dem Grundmaterial des Dichtsegments artgleiches Basispulver und ein Lotpulver aufweist.

5. Verfahren nach einem der Ansprüche 1 bis 4, **dadurch gekennzeichnet, dass** die metallische Verstärkungsschicht eine Materialstärke von 1 bis 4 mm, vorzugsweise 1 bis 3,5 mm, weiter vorzugsweise 1,5 bis 3 mm, weiter vorzugsweise 2 bis 3 mm aufweist.

6. Verfahren nach einem der Ansprüche 1 bis 5, **dadurch gekennzeichnet, dass** vor dem Aufbringen der Keramikschicht eine Haftvermittlerschicht (18) aufgebracht wird.

7. Verfahren nach Anspruch 6, **dadurch gekennzeichnet, dass** die Haftvermittlerschicht (18) ein Material auf MCrAlY-Basis aufweist.

8. Verfahren nach Anspruch 6 oder 7, **dadurch gekennzeichnet, dass** die Dicke der Haftvermittlerschicht (18) 0,1 mm oder weniger beträgt.

9. Verfahren nach einem der Ansprüche 1 bis 8, **dadurch gekennzeichnet, dass** das Aufbringen der Keramikschicht (21) durch atmosphärisches Plasmaspritzen (APS) erfolgt.

10. Verfahren nach einem der Ansprüche 1 bis 9, **dadurch gekennzeichnet, dass** die Keramikschicht (21) eine Porosität von 10 bis 40 Vol.-%, vorzugsweise 20 bis 30 Vol.-% aufweist.

11. Verfahren nach Anspruch 10, **dadurch gekennzeichnet, dass** die Porosität durch einen Anteil eines thermisch entfernbaren Stoffes in dem aufgebrachten Keramikmaterial bewirkt wird.

12. Verfahren nach Anspruch 11, **dadurch gekennzeichnet, dass** der thermisch entfernbare Stoff ein Polymer, vorzugsweise ein Polyester ist.

13. Verfahren nach einem der Ansprüche 1 bis 12, **dadurch gekennzeichnet, dass** das Keramikmaterial der Keramikschicht ZrO₂ enthält.

14. Verfahren nach einem der Ansprüche 1 bis 13, **dadurch gekennzeichnet, dass** die Dicke der aufgebrachten Keramikschicht (21) 0,2 bis 2 mm, vorzugsweise 0,5 bis 1,5 mm beträgt.

## Claims

1. Method for repairing sealing surfaces of sealing segments of a rotor/stator seal of a gas turbine that are arranged on the inner circumference of a part of the turbine casing, having the following steps:
a) removing material from the sealing surfaces (4) of the sealing segments (3) down to the base material of the sealing segments,
b) applying at least one metallic reinforcing layer with a material thickness of at least 1 mm,
c) applying a ceramic layer with a material thickness of 0.3 to 2 mm.

2. Method according to claim 1, **characterised in that** the metallic reinforcing layer has a material which is of the same type as the base material of the sealing segment.

3. Method according to claim 1 or 2, **characterised in that** the metallic reinforcing layer is applied by a method chosen from the group comprising welding, soldering and solder diffusion using a pre-sintered solder preform.

4. Method according to claim 3, **characterised in that** the solder preform comprises at least 40 % by weight, preferably 50 to 85 % by weight, more preferably 60 to 80 % by weight of a base powder which is of the same type as the base material of the sealing segment, and a solder powder.

5. Method according to any one of claims 1 to 4, **characterised in that** the metallic reinforcing layer has a material thickness of 1 to 4 mm, preferably 1 to 3.5 mm, more preferably 1.5 to 3 mm, even more preferably 2 to 3 mm.

6. Method according to any one of claims 1 to 5, **characterised in that** an adhesion promoting layer (18) is applied before the ceramic layer is applied.

7. Method according to claim 6, **characterised in that** the adhesion promoting layer (18) comprises a material based on MCrAlY.

8. Method according to claim 6 or 7, **characterised in that** the thickness of the adhesion promoting layer (18) is 0.1 mm or less.

9. Method according to any one of claims 1 to 8, **characterised in that** the ceramic layer (21) is applied by atmospheric plasma spraying (APS).

10. Method according to any one of claims 1 to 9, **characterised in that** the ceramic layer (21) has a porosity of 10 to 40 vol.%, preferably 20 to 30 vol.%.

11. Method according to claim 10, **characterised in that** the porosity is achieved by a portion of a thermally removable substance in the applied ceramic material.

12. Method according to claim 11, **characterised in that** the thermally removable substance is a polymer, preferably a polyester.

13. Method according to any one of claims 1 to 12, **characterised in that** the ceramic material of the ceramic layer contains ZrO₂.

14. Method according to any one of claims 1 to 13, **characterised in that** the thickness of the applied ceramic layer (21) is 0.2 to 2 mm, preferably 0.5 to 1.5 mm.

## Revendications

1. Procédé de réparation de surfaces d'étanchéité de segments d'étanchéité d'un dispositif d'étanchéité de rotor/stator d'une turbine à gaz, disposés sur la circonférence interne d'une partie de carter de turbine, comprenant les étapes suivantes:
a) enlèvement de matière sur les surfaces d'étanchéité (4) des segments d'étanchéité (3) jusqu'au matériau de base des segments d'étanchéité,
b) application d'au moins une couche de renforcement métallique avec une épaisseur de matériau d'au moins 1 mm,
c) application d'une couche de céramique d'une épaisseur de matériau de 0,3 à 2 mm.

2. Procédé selon la revendication 1, **caractérisé en ce que** la couche de renforcement métallique contient un matériau similaire au matériau de base du segment d'étanchéité.

3. Procédé selon la revendication 1 ou 2, **caractérisé en ce que** la couche de renforcement métallique est appliqué à l'aide d'un procédé sélectionné dans le groupe constitué de : soudure, brasage et diffusion de brasage en utilisant une préforme de brasage préfrittée.

4. Procédé selon la revendication 3, **caractérisé en ce que** la préforme de brasage contient au moins 40% en poids, de préférence de 50 à 85% en poids, de préférence de 60 à 80% en poids d'une poudre de base similaire au matériau de base du segment d'étanchéité et une poudre de brasage.

5. Procédé selon l'une des revendications 1 à 4, **caractérisé en ce que** la couche de renforcement métallique présente une épaisseur de matériau de 1 à 4 mm, de préférence de 1 à 3,5 mm, de préférence de 1,5 à 3 mm, de préférence de 2 à 3 mm.

6. Procédé selon l'une des revendications 1 à 5, **caractérisé en ce que**, avant l'application de la couche de céramique, une couche de promoteur d'adhérence (18) est appliquée.

7. Procédé selon la revendication 6, **caractérisé en ce que** la couche de promoteur d'adhérence (18) contient un matériau à base de MCrAlY.

8. Procédé selon la revendication 6 ou 7, **caractérisé en ce que** l'épaisseur de la couche de promoteur d'adhérence (18) est de 0,1 mm ou moins.

9. Procédé selon l'une des revendications 1 à 8, **caractérisé en ce que** l'application de la couche de céramique (21) a lieu par pulvérisation de plasma à la pression atmosphérique (APS).

10. Procédé selon l'une des revendications 1 à 9, **caractérisé en ce que** la couche de céramique (21) présente une porosité de 10 à 40% en volume, de préférence de 20 à 30% en volume.

11. Procédé selon la revendication 10, **caractérisé en ce que** la porosité est produite par une fraction de substance pouvant être éliminée thermiquement dans le matériau céramique appliqué.

12. Procédé selon la revendication 11, **caractérisé en ce que** la substance pouvant être éliminée thermiquement est un polymère, de préférence un polyester.

13. Procédé selon l'une des revendications 1 à 12, **caractérisé en ce que** le matériau céramique de la couche de céramique contient du ZrO₂.

14. Procédé selon l'une des revendications 1 à 13, **caractérisé en ce que** l'épaisseur de la couche de céramique (21) appliquée est de 0,2 à 2 mm, de préférence de 0,5 à 1,5 mm.
